(19) Europäisches Patentamt
European Patent Office
Office européen des brevets

(11) EP 1 780 610 A1

(12) **EUROPEAN PATENT APPLICATION**
published in accordance with Art. 158(3) EPC

(43) Date of publication:
**02.05.2007 Bulletin 2007/18**

(21) Application number: **05768754.3**

(22) Date of filing: **05.08.2005**

(51) Int Cl.:
***G03H 1/02*** *(2006.01)* ***G03H 1/04*** *(2006.01)*
***G11B 7/0065*** *(2006.01)* ***G11B 7/24*** *(2006.01)*

(86) International application number:
**PCT/JP2005/014378**

(87) International publication number:
**WO 2006/018986 (23.02.2006 Gazette 2006/08)**

(84) Designated Contracting States:
**DE DK FR GB HU SE**

(30) Priority: **18.08.2004 JP 2004238064**

(71) Applicant: **Konica Minolta Medical & Graphic, Inc.**
**Tokyo 163-0512 (JP)**

(72) Inventor: **TAKEYAMA, Toshihisa**
**Hino-shi**
**Tokyo 1918511 (JP)**

(74) Representative: **Gille Hrabal Struck Neidlein Prop Roos**
**Brucknerstrasse 20**
**40593 Düsseldorf (DE)**

(54) **HOLOGRAPHIC RECORDING MEDIUM, HOLOGRAPHIC RECORDING METHOD AND HOLOGRAPHIC INFORMATION MEDIUM**

(57) When D1 is the thickness of the first substrate, D2 is the thickness of the second substrate, and Dh is the thickness of the holographic recording layer, the holographic recording medium satisfies the following formulas (1) and (2), and a holographic recording layer on which holographic recording is not conducted has a hardness of 10 - 70 degrees that is measured by ISO 868 type A durometer.

$$(1)\ 0.2 \leq Dh/(D1+D2) \leq 1.0$$

$$(2)\ 1.0 \leq (Dh + D1+D2) \leq 3.0\ [mm]$$

FIG. 2 (a)

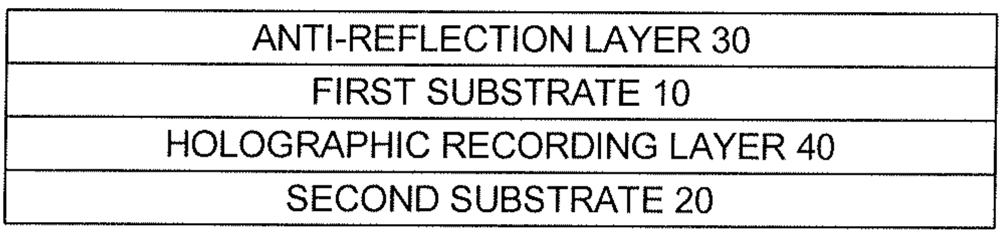




Printed by Jouve, 75001 PARIS (FR)

(Cont. next page)

FIG. 2 ( b )

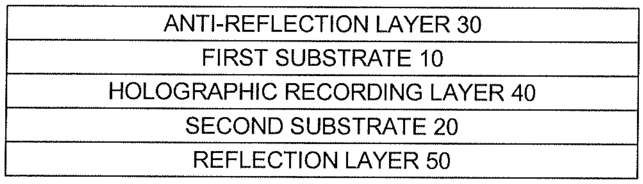
ANTI-REFLECTION LAYER 30
FIRST SUBSTRATE 10
HOLOGRAPHIC RECORDING LAYER 40
SECOND SUBSTRATE 20
REFLECTION LAYER 50

FIG. 2 ( c )

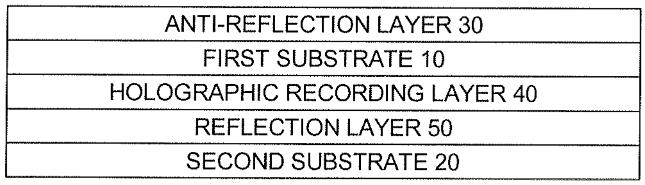
ANTI-REFLECTION LAYER 30
FIRST SUBSTRATE 10
HOLOGRAPHIC RECORDING LAYER 40
REFLECTION LAYER 50
SECOND SUBSTRATE 20

## Description

## TECHNICAL FIELD

The present invention relates to a holographic recording medium that can be of a large capacity and can make high speed transfer possible, and further to a holographic recording method and to a holographic information medium on which information is recorded holographically.

## BACKGROUND

In recent years, high-speed exchanges of data in a large volume have been increased by the spread of Internet and by a shift to the broadband system, and a volume of data stored in each affiliated organ has been expanded rapidly because of extension of e-governments caused by promotion of the government of each country. In addition, recording media each having high storage capacity are expected to be needed in the future, by the spread of a high-definition television in a TV broadcast and by the spread of a digital terrestrial broadcast, and among them, next-generation optical recording media such as a blu-ray disc and a HDDVD disc are estimated to spread in the future. With respect to the next but one generation recording media, however, main products are absent, although various systems are proposed.

Among the next but one generation recording media, a memory system of a page type, especially, holographic recording is proposed to take the place of a conventional memory device, and it is watched with keen interest recently, because it has a high storage capacity and is of the system which makes random access and high speed transfer possible. With respect to this holographic recording, detailed explanations are described in some introductions (such as, for example, Non patent document 1).

As a recording system in the holographic recording, a recording method using a holographic recording medium wherein transparent materials are arranged respectively on both sides of a holographic recording layer (for example, Patent document 1) and a recording method using a holographic recording medium equipped with a reflection surface arranged on one side of a holographic recording layer (for example, Patent document 2) are proposed.

In the basic principle of the holographic recording medium of this kind, the refractive index in a holographic recording layer in the medium is changed to record information by giving holographic exposure, and the change of the refractive index recorded in the medium is read to regenerate information, and there are proposed various materials as a material for the holographic recording layer, including the material using an inorganic material (for example, Patent document 3), the material using a compound that shows structural isomer with light (for example, Patent document 4), or the material using diffusion polymerization of photopolymer (for example, Patent document 5). Among these, in the material using photopolymer described in Patent Document 5, a volatile solvent is used in the case of manufacturing a composition for forming a recording layer, and therefore, the maximum thickness of the recording layer is limited to about 150 $\mu$m. In addition, volume shrinkage of 4 - 10% caused by polymerization has affected adversely the reliability in the case of regenerating recorded information.

There are proposed a composition for forming a holographic recording layer utilizing cation polymerization wherein no solvent is used and organization shrinkage is relatively less (for example, Patent document 6) and others, for improving the aforesaid weak points. However, the composition for forming a holographic recording layer has drawbacks wherein there is a fear that island-shaped portions formed, under the holographic exposure, by photopolymerization of monomer in the recording layer are moved undesirably, and a volume of liquid substance is expanded by changes of ambient temperatures in the apparatus, because those other than monomer that causes photo-cation polymerization are liquid substances.

To improve these drawbacks, radical polymerization is used for recording in holographic exposure, and there is proposed a composition (for example, U. S. Patent No. 6,482,551) that forms a binder after forming a medium, for holding monomer that makes this radical polymerization before exposure to be possible, thus, it is possible to thicken a layer thickness of the holographic recording layer and to lessen the volume shrinkage by using the composition of this kind.

However, by an above-mentioned method, there was a case where the following failures were produced depending on the binder formed from a binder formation compound or the monomer in which radical polymerizaion is possible:

in the case of the formed binder is too hard, diffusion polymerization of the monomer in which radical polymerization is possible is not fully carried out in a holographic recording layer;

in the case of a binder is too soft, polymer which is made of a monomer which was formed of diffusion polymerization, and in which radical polymerization is possible moves in a holographic recording layer according to a storage condition;

furthermore, in the case of stresses, such as suppress strength and bending, are applied to media, the media itself

deform, or polymer which is made of a monomer in which radical polymerization is possible moves; or

As a result, high energy is required for holographic during exposure or read-out of the recorded data cannot be performed.
Non patent document 1: "Holographic Data Storage (Springer Series in Optical Sciences, Vol. 76)" written by Hans J. Coufal and others (Springer-Verlag GmbH & Co. KG, August in 2000)

Patent document 1: U. S. Patent No.5,719,691
Patent document 2: TOKKAI No. 2002-123949
Patent document 3: British Patent No. 9,929,953
Patent document 4: TOKKAIHEI No. 10-340479
Patent document 5: U. S. Patent No. 4,942,112
Patent document 6: U. S. Patent No. 5,759,721

## DISCLOSURE OF THE INVENTION

## PROBLEM TO BE SOLVED BY THE INVENTION

The present invention is achieved in view of the above problem, an object of the present invention is to provide the holographic recording media and the holographic recording method sensitiveness was highly excellent in shelf life, and further provide holographic information media excellent in read-out of the information written in from the exterior to the stress.

## MEANS FOR SOLVING THE PROBLEM

The above object can be attained by the following structures.
A holographic recording medium including:

a first substrate, a holographic recording layer and a second substrate which are laminated in this order,
wherein holographic recording is conducted for the holographic recording layer by entering information light and reference light from the first substrate side;
wherein, when D1 is the thickness of the first substrate, D2 is the thickness of the second substrate, and Dh is the thickness of the holographic recording layer, the holographic recording medium satisfies the following formulas (1) and (2), and the holographic recording layer has a hardness of 10 - 70 degrees that is measured by a type A durometer specified by ISO 868.

$$\text{Formula (1)}\quad 0.2 \leq Dh/(D1+D2) \leq 1.0$$

$$\text{Formula (2)}\quad 1.0 \leq (Dh+D1+D2) \leq 3.0\ [\text{mm}]$$

Further, the holographic recording medium is characterized in that the holographic recording layer comprises a binder forming compound, a photopolymerizable compound which has a functional group capable of photopolymerizing and a photopolymerization initiator which can initiate a polymerization reaction of the photopolymerizable compound.
Further, a holographic recording method for recording information on the above mentioned holographic recording medium, characterized by comprising:

reacting the binder forming compound for forming a binder;
conducting holographic exposure based on the information from a side on which the first substrate is laminated;
activating the photopolymerization initiator with the holographic exposure for generating activated species; and
diffusing polymerizing the photopolymerizable compound by the activated species in the holographic recording layer.

Further, a holographic information medium comprises:

a first substrate;

a holographic information recording layer having a region where a binder formed by a binder forming compound is a major component and a region where a polymer obtained by polymerizing a photopolymerizable compound having a functional group being capable of photopolymerizing is a major component in accordance with information; and a second substrate, wherein the first substrate, the holographic information recording layer and the second substrate are laminated in that order, and read-out light enters from the first substrate side and information is read out from the second substrate side,
the holographic information medium characterized in that when D1 is the thickness of the first substrate, D2 is the thickness of the second substrate, and Dh is the thickness of the holographic recording layer, the holographic recording medium satisfies the above formulas (1) and (2), and the holographic recording layer has a hardness of 15 - 80 degrees that is measured by a type A durometer specified by ISO 868.

## EFFECT OF THE INVENTION

By the present invention, a holographic recording media and the holographic recording method with high sensitiveness and the excellent permanence, and holographic information media excellent in read-out of the information written in from the exterior to ability could be provided.

## BRIEF DESCRIPTION OF THE DRAWINGS

Fig. 1 is a schematic diagram showing principle of operation of the measuring device which measures shrink rate.
Fig. 2 (a) is a sectional view showing the construction of layers included in the holographic recording medium and the holographic information medium.
Fig. 2 (b) is a sectional view showing the construction of layers included in the holographic recording medium and the holographic information medium.
Fig. 2 (c) is a sectional view showing the construction of layers included in the holographic recording medium and the holographic information medium.

## EXPLANATION OF THE NUMBERS

**[0019]**

01 emission point
02 view point of a viewer
3 holographic recording media
4 white illumination light source
5 spectrometer
6 personal computer
7 movable pinhole plate
8 pinhole
9 illumination
10 first substrate
20 second substrate
30 antireflection layer
40 holographic recording media or holographic information recording media
50 reflection layer

## BEST MODE FOR CARRYING OUT THE INVENTION

In the following, the holographic recording medium and the holographic information medium will be detailed.
In the following, the construction of layers included in the holographic recording medium and the holographic information medium will be explained, using the Fig. 2(a), Fig. 2(b) and Fig. 2(c).
The Fig. 2(a), Fig. 2(b) and Fig. 2(c) are the sectional views showing the construction of layers included in the holographic recording medium and the holographic information medium.
As showing in the Fig. 2(a), Fig. 2(b) and Fig. 2(c), the holographic recording medium and the holographic information medium of this invention basically have a layer construction in which a holographic recording layer 40 or a holographic information recording layer 40 is sandwiched between the first substrate 10 and the second substrate 20.

Furthermore, an anti-reflection layer 30 may be provided on the first substrate 10.

Furthermore, it is possible to provide a reflection layer 50 on the second substrate 20 as shown in Fig. 2(b).

The reflection layer may be also provided between the holographic recording layer 40 or the holographic information recording layer 40 and the second substrate 20 as shown in the Fig. 2(c).

In the holographic recording media of the present invention, the holographic recording layer is sandwiched between the first substrate and the second substrate, holographic recording is conducted for the holographic recording layer by entering information light and reference light from the first substrate side; when D1 is the thickness of the first substrate, D2 is the thickness of the second substrate, and Dh is the thickness of the holographic recording layer, the holographic recording medium satisfies the following formulas (1) and (2), and a holographic recording layer on which holographic recording is not conducted, has a hardness of 10 - 70 degrees that is measured by the type A durometer specified by ISO 868.

$$\text{Formula (1)}\quad 0.2 \leq Dh/(D1+D2) \leq 1.0$$

$$\text{Formula (2)}\quad 1.0 \leq (Dh + D1+D2) \leq 3.0\ [mm]$$

In the holographic recording media of the present invention, the holographic recording layer is sandwiched between the first substrate and the second substrate, since it is required to perform a structural change and mass transfer of a molecule in the case that a holographic recording layer comprises the organic substance for the substrates mentioned later, generally the holographic recording layer comprises soft layers for the substrates. Therefore, it is preferable to satisfy the relationship of an above-mentioned formula (1), in the case that the thickness of a holographic recording layer is Dh, the thickness of the first substrate is D1 and the thickness of the second substrate is D2. In the case of Dh/(D1+D2) >1.0, although it is possible to make a recording media thin while securing the layer thickness of a recording layer, the layer thickness of a recording layer becomes thicker for the thickness of a substrate. Moreover, since the following problems may arise, it is not preferable that: when the pressing force is locally applied to a recording media, too much deformation of the recording layer easily occurs, and in the case that two kinds of stress with opposite directions are applied laterally to the first substrate and the second substrate respectively, the recording layer may shift diagonaly.

Moreover, in the case of 0.2>Dh/(D1+D2), it is not preferable because a layer thickness of a holographic recording layer cannot be thickened, or even if the recording layer is thickended, it is necessary to make the thickness of the substrate thicker, the whole recording media becomes thicker, in other words, the mass as the single body of the recording media itself becomes heavy, and a load to a drive system of an apparatus arises.

Moreover, in order to suppress the load of the single body of the recording media to the drive system of the apparatus, it is preferable to make the thickness with in a range of Dh+D1+D2 ≤ 3.0[mm] represented by the above-mentioned formula (2), furthermore, also in order to suppress a deformation of the media itself and a deformation of the holographic recording layer, it is preferable to make it with in a rage of Dh+D1+D2 ≥ 1.0[mm].

Furthermore, in the present invention, in the holographic recording media which satisfies an above-mentioned formula (1) and an above-mentioned formula (2), in order to further conduct recording with even a low exposure energy as an exposure energy at the time of performing a hologram recording in the holographic recording layer by entering information light and reference light from the first substrate side, it is preferable that the holographic recording layer on which holographic recording is not conducted, has a hardness of 70 degrees or less that is measured by the type A durometer specified by ISO 868.

Moreover, in order to restore the deformation of the recording layer produced in the case that a pressing force is applied locally to a part of the substrates, or in the case that stresses are lateraly applied in opposed directions to the first substrate and the second substrate, to the original shape, it is preferable that the hardness measured with the type A durometer specified by ISO 868 is 10 degrees or more.

Next, the holographic recording layer which is the feature of the present invention and has a hardness of 10 - 70 degrees measured with the type A durometer specified by ISO 868 before hologram recording is explained in detail.

Although there will be no special restriction when the holographic recording layer of the present invention has the hardness before hologram recording in the above-mentioned range, in order to thicken the recording layer, after structuring a binder formation compound on the state of a media, it is preferable to cross-link the binder formation compound so as to become a binder. In this case, it is more preferable that the holographic recording layer contains a binder formation compound, a compound having a functional group capable of photopolymerizing, and a photopolymerization initiator that can start the polymerization reaction of the compound having a functional group capable of photopolymerizing.

Herein, the binder forming compound of this invention means a compound that binder forming compound does not polymerize or cross-link to each other at the time of preparing a holographic recording layer forming composition, but the binder forming compound is made into a binder by polymerization or cross-linking after structuring a shape of a holographic recording medium at the time of constructing the holographic recording medium as described below.

As such a binder forming compound, it may be preferable to appropriately select and utilize at least one combination selected from 8 combinations of a thermally acid generating compound and one of (1) a compound provided with an isocyanate group and a compound provided with a hydroxyl group,

(2) a compound provided with an isocyanate group and a compound provided with an amino group,
(3) a compound provided with a carbodiimido group and a compound provided with a carboxyl group,
(4) a compound provided with an unsaturated ester group and a compound provided with an amino group,
(5) a compound provided with an unsaturated ester group and a compound provided with a mercaptan group,
(6) a compound provided with a vinyl group and a compound provided with a silicon hydride group,
(7) a compound provided with an oxirane group and a compound provided with a mercaptan group; and
(8) a compound provided with at least one of a group selected from oxirane, oxetane, tetrahydrofuran, oxepane, monocyclic actal, bicyclic acetal, lactone, cyclic orthoester and cyclic carbonato in the molecule.

It may be more preferable to utilize at least one combination selected from combinations of a thermally acid generating compound and a compound which can be polymerized or cross-linked into a binder under a moderate condition among the above selectable compounds, such as (1) a compound provided with an isocyanate group and a compound provided with a hydroxyl group, and (2) a compound provided with an oxirane group and a compound provided with a mercaptan group; or (3) a compound provided with at least one of a group selected from oxirane, oxetane, tetrahydrofuran, oxepane, monocyclic actal, bicyclic acetal, lactone, cyclic orthoester and cyclic carbonato in the molecule. Furthermore, from view point of easiness to control the hardness measured by the durometer according to the present invention, a combination of (1) a compound provided with an isocyanate group and a compound provided with a hydroxyl group is more preferable.

From the combination of (1) a compound provided with an isocyanate group and a compound provided with a hydroxyl group, a compound provided with an isocyanate group, which is employed at the time of cross-linking a compound provided with an isocyanate group and a compound provided with a hydroxyl group, is not specifically limited, however, more preferable is a compound provided with two or more isocyanate groups in the molecule with respect to sufficiently hold a compound provided with an ethylenic unsaturated bond as a photopolymerization composition detailed above after preparation of a holographic recording medium. Specific examples of such a compound provided with an isocyanate group include such as 1,8-diisocyanate-4-isocyanatemethyl octane, 2-isocyanateethyl-2,6-diisocyanate caproate, benzene-1,3,5-triisocyanate, 1-methylbenzene-2,4,6-triisocyanate, 1,3,5-trimethylbenzene-2,4,6-triisocyanate, diphenylmethane-2,4,4'-triisocyanate, triphenylmethane-4,4',4"-triisocyanate, bis(isocyanatetolyl)phenylmethane, dimethylene disiocyanate, tetramethylene diisocyanate, hexamethylene diisocyanate, 2,2-dimethylpentane diisocyanate, 2,2,4-trimethylpentane diisocyanate, decane isocyanate, ω, ω'-disiocyanate-1,3-dimethylbenzene, ω, ω'-disiocyanate-1,2-dimethylcyclohexane diisocyanate, ω, ω'-disiocyanate-1,4-diethylbenzene, isophorone diisocyanate, 1-methylhexyl-2,4-diisocyanate, ω, ω'-disiocyanate-1,5-dimethylnaphthalene, ω, ω'-disiocyanate-n-propylbiphenyl, 1,3-phenylene diisocyanate, 1-methylbenzene-2,4-diisocyanate, 1,3-dimethylbenzene-2,6-diisocyanate, naphthalene-1,4-diisocyanate, 1,1'-dinaphthyl-2,2'-diisosianate, biphenyl-2,4-diisocyanate, 3,3'-dimethylbiphenyl-4,4'-diisocyanate, diphenylmethane-4,4'-diisocyanate, 2,2'-dimethyldiphenylmethane-4,4'diisocyanate, dicyclohexylmethane-4,4'-diisocyanate, 3,3'-dimethoxydiphenylmethane-4,4'-diisocyanate, 4,4'-diethoxydiphenylmethane-4,4'-diisocyanate, tolylene diisocyanate, 1,5-naphthylene diisocyanate, xylylene diisocyanate and tetramethlenexylylene diisocyanate, in addition to these, a dimmer, a trimer or an adduct of each above-described isocyanate (such as a 2-mol-adduct of hexamehylene diisocyanate, a 3-mol-adduct of hexamehylene diisocyanate, a 2-mol-adduct of 2,4-tolylene diisocyanate and a 3-mol-adduct of 2,4-tolylenediisocyanate), an adduct of two or more types of isocyanates being different to each other selected from these isocyanates and adducts (such as an adduct of tolylene diisocyanate and trimethylol propane and an adduct of hexamethylene diisocyanate and trimethylol propane) of these isocyanates and dihydric or trihydric polyalcohols (such as diethylene glycol, polyethylene glycol, dipropylene glycol, polypropylene glycol, polytetramethylene glycol and trimethylol propane). These isocyanate compounds may be utilized alone or in combination of two or more types.

Herein, with respect to the isocyanate compounds described above, a holographic information medium, which is utilized in a state of finishing recording of whole information on a holographic recording medium, in which a recording layer comprising a holographic recording composition, detailed later is laminated, is possibly exposed to variety of environmental temperatures at which the holographic information medium is placed under a fluorescent lamp or by the window or is allowed to stand similar to such as a CD and a DVD. Therefore, preferable are those to depress coloration of a recording layer under variety of conditions, and aliphatic isocyanate compounds among the above compounds are more preferable to depress such coloration.

Besides, if it does not prevent particularly the object of the present invention, the compound which has the isocyanate group used when making it a binder by carrying out the crosslinking with the combination of the compound which has the isocyanate group of (1), and the compound which has a hydroxyl group can be used without a restriction. As a compound which has an isocyanate group, in order to make it a high-molecular weight binder by a crosslinking reaction with the compound which has two or more hydroxyl groups in above-mentioned molecular, the compound which has two or more hydroxyl groups in molecular is more preferable, and furthermore, the compound which has two or more alcoholic hydroxyl groups of an aliphatic sries in molecular is more preferable in order to make easy to control the rigidity measured with durometer.

Such compounds provided with at least two alcoholic hydroxyl groups in the molecule include such as diethylene glycol, triethylene glycol, polyethylene glycol, dipropylene glycol, tripropylene glycol, polypropylene glycol, 2,2-dimethyl-1,3-propanediol, 2,2-diethyl-1,3-propanediol, 2-butyl-2-ethyl-1,3-propanediol, 1,2-butanediol, 1,4-butanediol, polytetramethylene glycol, 1,5-pentanediol, 2-methyl-2,4-pentanediol, 3-methyl-1,5-pentanediol, 1,6-hexanediol, 2-ethyl-1,3-hexanediol, 2,5-dimethyl-2,5-hexanediol, 1,10-decanediol, 1,4-cyclohexanediol, glycerin, 1,2,6-hexanetriol, trimethylolethane, trimethylolpropane, pentaerythritol and sorbitol, in addition to these, alcohols in which the above-described compounds provided with at least two alcoholic hydroxyl groups in the molecule are modified with bihydric alcohols such as ethylene glycol, diethylene glycol, triethylene glycol, polyethylene glycol, propyrene glycol, dipropylene glycol, tripropylene glycol, polypropylene glycol and polytetramethylene glycol. Herein, these compounds provided with at least two alcoholic hydroxyl groups in the molecule may be utilized alone or in combination of two or more types.

The molecular weight of a compound provided with at least two aliphatic type alcoholic hydroxyl groups in the molecule is preferably 100 - 2000 taking into consideration volatility of the compound itself and compatibility or solubility with a compound provided with an ethylenic unsatulated bond, a compound provided with a functional group which can perform cationic polymerization or a photopolymerization initiator.

As an addition amount of a compound provided with at least two aliphatic type alcoholic hydroxyl groups in the molecule cannot be defined ununequivocally with respect to the types and addition amount of an isocyanate compound as an essential component described above, however, is generally in a range of $0.3 \leq N/M \leq 1.5$ and more preferably $0.5 \leq N/M \leq 1.5$, when a mol number of isocyanate groups being present in a holographic recording composition is N [mol] and a mol number of hydroxyl groups being present in a holographic recording composition of the aforesaid compound provided with an alcoholic hydroxyl group is M [mol], with respect to compatibility and control of cross-linking reaction in order to make within a hardness measured by durometer according to the invention .

In the present invention, in order to provide a polymerized compound of a compound having one or more functional group capable of being obtained with diffusion polymerization and photopolymerizing with a remarkable difference against a binder formed by the abovementioned binder forming compound, it is preferable to make a difference between a refractive index of a binder resin formed by a binder forming compound and a refractive index of a compound having at least one or more functional group capable of photopolymerizing or a refractive index of a photopolymerized compound formed by the compound having at least one or more functional group capable of photopolymerizing, larger as far as possible, within a level not causing a practical problem including reduction of transmission and increase of haze.

As a compound having at least one or more functional group being capable of photopolymerizing, even if a compound does not react at the reaction time of cross-linking or polymering of the abovementioned binder forming compound, the compound can be used without any limitation, it may be preferable to use a compound provided with an ethylenic unsaturated bond, because it may relatively easy to obtain a high-refractive index compound having the refractive index of 1.55 more.

In a case that a compound having one or more ethylenic unsaturated bond in the molecule is used as a functional group being capable of photopolymerizing and having a refractive index of 1.55 or more, it is preferable to select a binder compound so that the refractive index of a binder formed by the binder forming compound is less than a refractive index of a polymerized compound formed by polymerization with a compound having one or more ethylenic unsaturated bond in the molecule.

Incidentally, as a compound which has a refractive index of 1.55 or more and includes one or more ethylenic unsaturated bond in the molecule, generally a styrene derivative which has hetero atoms such as nitrogen, oxygen, sulfur and phosphate, halogen atoms such as chlorine, bromine and iodine, or two or more aromatic rings and a compound including an (meta-) acryloyl group may be listed. Specific examples of these compounds include 4-bromo styrene, paracumylphenoxyethylene glycol acrylate, paracumylphenoxyethylene glycol methacrylate, hydroxyethylated o-phenylphenol acrylate, hydroxyethylated β-naphthol acrylate, tribromophenyl acrylate, tribromophenyl methacrylate, triiodophenyl methacrylate, polyethyleneoxide modified tetrabromobisphenol A diacrylate, polyethyleneoxide modified tetrabromobisphenol A dimethacrylate, bis(4-methacryloylthiophenyl)sulfide, and compounds provided with a fluorene skeleton described in JP-A Nos. 6-301322, 2000-344716 and 2003-29604.

Further, for the purposes of such as to control compatibility and viscosity at the time of preparation of a holographic recording layer composition and to control dispersion polymerization at the time of holographic exposure, a compound provided with a (meth)acryloyl group having a refractive index of less than 1.55 may also be added in a range

of not disturbing the purpose of providing a refractive index difference between a binder formed from a binder forming compound and a diffusion polymerization product of a compound provided with an ethylenic unsaturated bond.

Furthermore, the compound which has ethyleny unsaturated bonding in the intramolecular mentioned above from a point of the ease of carrying out of the mass transfer at the case of hologram recording and which it has at least one or more pieces is liquefied, or it is preferable that a melting point is 60 degrees Celsius or less, and these compounds may be used by a kind independent and may use two or more sorts altogether. Furthermore, it is ordinarily preferable that those compounds are 1.0 wt% or more and 30 wt% or less in the composition for holographic recording, and it is more preferable to make it 4.0 wt% or more and 20 wt% or less.

As a photopolymerization initiator usable at the time that the abovementioned compound having one or more functional groups capable of photomolymerizing is a compound having at least one or more an ethylenic unsaturated bonds in the molecule, even if the initiator generates radical with light, the initiator is not restricted, commonly known conventional photopolymrization initiators such as benzoine and derivatives thereof, carbonyl compounds such as benzophenone, azo compounds such as azobisbutyronitrile, sulfer compounds such as dibenzothiazolylsulfide, peroxides such as benzoyl peroxide, halogen compounds such as 2-tribromomethane sulfonyl-pyridine, quartenary ammonium salts or substituted or unsubstituted diphenyliodonium salts, onium compounds such as a triphenylsulfonium salt, bisimidazol compounds such as 2,2-bis(o-chlorophenyl)-4,4',5,5'-tetraphenylbiimidazol, metal n complexes such as, iron arene complexes such as (η6-cumene) (η5-cyclopentadienyl) iron (1+) hexafluorophosphate, and titanocene complexes, such as di-η(5)-cyclopentadienyl bis [2, 6-difluoro-3-(pyrrole-1-yl) phenyl] titanium (IV), and the complex with borate anion of cationic dye can be suitably chosen and used. In these, at least one sort of compounds particularly chosen from a bis imidazole compound, a metal n complex, and a complex with borate anion of cationic dye are more preferable from the field of sensitiveness or stability. Furthermore, particularly in a metal n complex, an iron arene complex is more preferable.

Furthermore, when the exposure light source wavelength used for holographic exposure described below does not have absorption to the wavelength of the laser light source used for holographic exposure of that photopolymerization initiator, or has very small absorption though it has the absorption, it is more preferable that it is used together with the sensitizing dye for carrying out wavelength sensitization of the spectrum wavelength of a photopolymerization initiator.

Herein, sensitizing dyes to spectrally sensitize the photopolymerization initiators utilized here include variety of dyes well known in the art, and for example, variety of dyes such as cumalin derivatives, methine derivatives, polymethine derivatives, triarylmethane derivatives, indoline derivatives, azine derivatives, thiazine derivatives, xanthene derivatives, thioxanthene derivatives, oxazine derivatives, acrydine derivatives, cyanine derivatives, carbocyanine derivatives, merocyanine derivatives, hemicyanine derivatives, rhodacyanine derivatives, azamethine derivatives, styryl derivatives, pyrylium derivatives, thiopyrylium derivatives, porphyradine derivatives, porphyrin derivatives, phthalocyanine derivatives and pyrromethene derivatives can be utilized alone or appropriately in combination of two or more types.

As specific examples of such a photopolymerization initiator or a sensitizing dye, utilized by suitable selection can be those described, for example, in USP Nos. 5,027,436, 5,096,790, 5,147,758, 5,204,467, 5,256,520 and 6,011,180; European Patent Nos. 255,486, 256,981, 277,915, 318,893, 401,165 and 565,488; JP-A Nos. 2-236553, 5-46061, 5-216227, 5-247110, 5-257279, 6-175554, 6-175562, 6-175563, 6-175566, 6-186899, 6-195015, 6-202540, 6-202541, 6-202543, 6-202544, 6-202548, 6-324615, 6-329654, 7-13473, 7-28379, 7-84502, 7-84503, 7-181876, 9-106069, 9-309907, 2002-60429, 2002-62786, 2002-244535 and 2002-296764.

The above-described photopolymerization initiator to photopolymerize a compound provided with an ethylenic unsaturated bond cannot be ununequivocally defined depending on the molecular weight of a photopolymerization initiator or the occupying ratio of ethylenic unsaturated bonds in a compound provided with an ethylenic unsaturated bond, however, in general, is preferably utilized in a range of 0.01 - 25 weight parts based on a compound provided with an ethylenic unsaturated bond. Further, a sensitizing dye which can spectrally sensitize a photopolymerization initiator cannot be ununequivocally defined depending on the molecular weight or mol absorbance of a dye itself, however, in general, is preferably utilized in a range of 0.01 - 25 weight parts based on a photopolymerization initiator.

Furthermore, in addition to an above-mentioned component, in the range which does not prevent the object of the present invention, various additives, such as a catalyser for constructing a bridge or polymerizing a binder formation compound, a thermostabilizer, a series moving agent, a porosity agent, or a compatibilizer, can be selected as a holographic recording layer timely, and can be used for it.

Moreover, in order to depend for the thickness Dh of a holographic recording layer on the diffraction efficiency of a recording layer, a dynamic range, spatial resolution, etc., it is not generally decided, but it is ordinarily 0.2-1.5 mm.

In the present invention, in the holographic recording layer which comprised above-mentioned compositions, after carrying out entire exposure for a holographic recording layer on which holographic recording has not been conducted so as to photopolymerize compounds which are included in a holographic recording layer and have at least one or more functional groups, it is more preferable to make the hardness measured with the type A durometer specified by ISO 868 to become within a range of 15 degrees or more to 80 degrees or less. Because, deformation of the recording layer generated in the case that a pressing force is applied partially on a part of a substrate or stresses different in respective

lateral directions to each other are applied to the first substrate and second substrate, can be restored to the original shape.

Next, the first substrate and second substrate which are the essential structural element of the present invention are explained in full detail.

As the first substrate to which information light and reference light used for the recording media of the present invention are irradiated, if a substrate has a high transmissivity for the wavelength of the irradiated light and does not cause expansion or contraction and curving deformation under working environmental temperature, the substrate can be used without special restriction.

Further, as the first substrate, it is more preferable to use a substrate whose total light transmissivity specified by ASTM D1003 for 3mm thickness is 90% or more, because the substrate has a high transmissivity for the wavelength of irradiated light. As such a substrate, the following can be selected and used appropriately:

glass base materials, such as quartz glass, soda glass, potash glass, lead crystal glass, boro silicate glass, almino silicate glass, titanium crystal glass, or glass ceramics,

plastics base materials, such as polymethylmethacrylate, bisphenol A type polycarbonate, resin that has a cyclic olefin as a monomeric unit, resin which has 1,1-bis (4 hydroxyphenyls) cyclohexane as a monomeric unit, resin which has 1, 1-bis (4 hydroxyphenyls)-3, 3, 5-trimethyl cyclohexane as a monomeric unit.

Moreover, in the case to use a resin as the first substrate of the present invention, it is preferable to make glass transition temperature within a range of 100-250 degrees Celsius, because of problems of mechanical strength, the cross-linking condition for forming a binder from a binder formation compound explained before in full detail and the forming condition for forming the substrate.

Next, the anti-reflective layer provided on the first substrate where information light and reference light enter into the holographic recording medium or on the first substrate where reference light enter into the holographic recording medium will be explained in detail.

In order to raise the efficiency of the entering light, it is preferable that the anti-reflective layer is provided on the first substrate in such a way that the reflectance is 0.01 - 1.0 % when an incident light enters from a perpendicular right angle of 90 degrees using the same light source as an incident light.

When a refractive index is lower than the refractive index of the first base material, there is no restriction particularly for an antireflection layer, it is more preferable of using the inorganic metal fluoride including $AlF3$, $MgF2$, $AlF3$, $MgF2$ and $CaF2$, the homopolymer containing fluorine atoms which includes vinylidene fluoride and a teflon (registered trademark), the copolymer, the graft polymer, the block polymer, organic fluorides such as a denaturation polymer embellished by the functional group that contains a fluorine atom, and $SiO2$ since the refractive index becomes lower.

Herein, a method to provide a layer comprising a fluorine type compound on a substrate cannot be ununequivocally defined depending on types of a substrate or a fluorine type compound, however, commonly known methods such as a sol-gel method, a vacuum evaporation method, a sputtering method, a DVD method or a coating method, or methods described in JP-A Nos. 7-27902, 2001-123264 and 2001-264509 by suitable selection.

Furthermore, the multilayered antireflection film which laminated two or more low-refractive-index layers used for acid resisting, such as a plastic lens and a light element, and high refractive index layers can also be conveniently used by the present invention. As such a multilayered antireflection film, lamination or method described in each official gazette of JP-A No. 5-142401, No. 5-249303, No. 6-3504, No. 6-331803, No. 7-35902, No. 7-253501, and No. 11-311702 etc. can be suitably chosen and used.

The thickness of such an anti-reflection layer is not ununequivocally defined depending on a surface treatment or materials of a substrate, however, it is generally in a range of 0.001 - 20 $\mu$m and preferably in a range of 0.005 - 10 $\mu$m.

The second substrate which is the essential structural element of the present invention can be used by selecting the substrate explained in full detail with the first above-mentioned substrate timely.

Moreover, it is preferable that the relationship between the thickness D1 of the first substrate and the thickness D2 of the second substrate is $D1 \leq D2$, from the aspect for the energy loss at the time of holographic exposure.

Moreover, in order to secure the flatness of a recording media, it is more preferable to make the ratio of the thickness of D1 and D2 into the range of $0.20 \leq D1/D2 \leq 1.00$.

Moreover, in the case that a light enters from the first substrate side into a holographic recording medium and a holographic information medium used in a holographic recording reproducing apparatus disclosed in U.S. Patent Nos. 5,838,467 and 6,700,686 and information reading is performed from the second substrate side, a single layer antireflection film or a multi-layer antireflection layer may further be arranged on a surface opposite to a side coming in contact with the holographic recording layer or the holographic information recording layer of the second substrate, in other words, at a side on which there is a light receiving section for receiving a light.

On the other hand, in a recording media used in a holographic recording reproducing apparatus disclosed in Japanese Patent Unexamined Publication No. 2002-123949, International Patent Publication No. 99/57719, it may be

preferable to provide a reflective layer having a reflective rate of 80 to 99.5% on at least one surface of a surface on which the second substrate holographic recording layer is laminated and the opposite surface. In a case to provide such a reflective surface, it may be preferable to make the reflective rate 80% or more for a wavelength of the reflected light, more preferably, 85% or more.

The materials of such a reflection layer are not specifically limited provided that a desired reflectance is obtained, however, the layer can be generally laminated by providing a thin layer comprising such as a metal on the substrate surface. To form such an reflection layer, a metal single crystal or polycrystal can be laminated as a metal thin layer by a commonly known method such as a vacuum evaporation method, an ion plating method or a sputtering method, and as metals utilized to laminate a metal thin layer, utilized can be alone or in combination of two or more types of metals such as aluminum, zinc, antimony, indium, selenium, tin, tantalum, chromium, lead, gold, silver, platinum, nickel, niobium, germanium, silicon, molybdenum, manganese, tungsten and palladium. The thickness of the metal thin layer is not limited provided that a desired reflectance can be obtained, however, is generally in a range of 1 - 3000 nm and preferably in a range of 5 - 2000 nm.

Further, in a holographic recording medium of this invention, physical patterns may be formed on one side surface of either substrate to track the position of information to be recorded or recorded information in the medium, similarly to commonly known optical disks such as a CD and a DVD, and as such patterns and methods to form the same, utilized by suitable selection can be those described, for example, in JP-A Nos. 2003-178456, 2003-228875, 2003-331464, 2004-126038, 2004-126040, 2004-126041 and 2004-127379, USP No. 6,625,100, US Patent Publication Open to Public Inspection Nos. 2004/0042375 and 2004/0067419.

As a method to prepare the recording medium detailed above, a holographic recording layer forming composition is prepared by mixing a holographic recording layer composition under a safelight at ordinary temperature or while being appropriately heated, and a holographic recording layer forming composition is applied on the first substrate at ordinary temperature or while being appropriately heated after the composition has been degassed to depress polymerization inhibition at the time of holographic exposure, then the second substrate is laminated thereon to make a predetermined thickness of a recording layer without introducing bubbles, finally the edge portions are sealed resulting in preparation of a recording medium. Further, the first substrate and the second substrate are fixed under a safelight in a flame so as to have a predetermined space therebetween, and a holographic recording layer composition is filled between the first substrate and the second substrate by means of injection molding not to introduce bubbles or by means of reduced pressure suction not to introduce bubbles, finally the edge portions are sealed resulting in preparation of a recording medium. Herein, under a safelight means an operation in a state of wavelengths of light which activates a photo-polymerization initiator being cut.

Furthermore, in the case of producing a recording medium by pasting together, a holographic recording layer forming member may be provided on the second substrate, not the above mentioned first substrate, or may provided on both the first and second substrates. Further, when sealing ends of the first substrate, the holographic recording layer and the second substrate, they may be sealed by cross-linking a liquid type sealing material represented by a moisture curable type adhesive or may be sealed by using a ring-shaped sealing material to secure a predetermined thickness of the holographic recording layer in advance. Incidentally, when using the ring-shaped sealing material, it may be provided in advance on the first substrate and/or the second substrate before supplying the holographic recording layer forming member or may be inserted between the first substrate and the second substrate later on.

Furthermore, the antireflection layer provided in the first substrate and second substrate may be laminated in advance, or may be installed after sealing the ends in the case of an antireflection layer is provided under a safelight.

Next, a method to record information on a holographic recording medium will be detailed.

A holographic recording method of the invention is characterized by including the steps of: reacting the binder forming compound for forming a binder before conducting holographic exposure for a holographic recording medium; holographic exposing the holographic recording medium based on the information to be recorded; activating the photopolymerization initiator for generating activated species; and diffusing polymerizing a compound having at least one or more functional groups capable of photopolymerizing by the activated species in the holographic recording layer, whereby information is recorded in the holographic recording medium.

Generally, since a recording layer forming composition is prepared without a solvent to apply a thick layer, it is difficult to obtain a uniform thickness or to eliminate bubbles incorporated at the time of preparation of the composition in a solid or highly viscous composition.

Therefore, fluidity is required in a state of ordinary temperature or being heated when a recording layer forming composition is prepared. In particular, it is not preferable when this recording layer forming composition is a liquid and has a low viscosity at ordinary temperature, because flatness as a recording medium is hard to be secured or there is a possibility of position shifting of a polymer, which has been formed from a compound which has a functional group being capable of photopolymerization, in a recording layer.

Therefore, in a holographic recording medium containing the aforesaid essential component, it is possible to secure the flatness by cross-linking a binder forming compound to form a binder before holographic exposure and to

prevent the shift of a polymer which has been formed by diffusion polymerization of a compound which has at lest one or more functional groups being capable of photopolymerization at the time of holographic exposure.

After forming a binder as stated above, holographic exposure is conducted based on information to be recorded to activate a photopolymerization initiator, and a compound which has at lest one or more functional groups being capable of photopolymerization is diffusion polymerized by the activated species, whereby information can be recorded in a holographic recording medium.

Besides, Although the cross-linking of an above-mentioned binder formation compound may be performed at the time of producing a structure of a holographic recording media or before writing information in the holographic recording media after producing the structure of the holographic recording media, when flatness of the recording media and deformation of the recording media at the time of handling are taken into consideration, it is preferable to carry out on the condition where the holographic recording layer forming composition is filled up between the first substrate and the second substrate which are controlled to have a prescribed spacing in the process of producing the structure of the holographic recording media.

Moreover, there is particularly no restriction in the apparatus which records and reproduces the holographic recording media used for holographic data processing of the present invention, when it can be recorded and reproduced to the holographic recording media of the present invention. As such recording and apparatus to reproduce, each leaflet of followings can be cited, for example: each official gazette of each specification of United States Patent No. 5,719,691, No. 5,838,467, No. 6,163,391, No. 6,414,296, the United States Patent application disclosure 2002/136143, JP-A No. 9-305978, No. 10-124872, No. 11-219540, JP-A No. 2000-98862, No. 2000-298837, No. 2001-23169, No. 2002-83431, No. 2002-123949, No. 2002-123948, and No. 2003-43904, international publications Nos. 99/57719, 02/05270, 02/75727.

As a laser light source used for a recording reproducing apparatus described above, if a laser light source can activate a photopolymerization initiator in a recording media and can read a recorded hologram, the laser light source can be used without restriction.

As such a light source, the semiconductor laser of a violet blue color region, an Ar laser, He-Cd laser, a frequency duplex YAG laser, He-Ne laser, Kr laser, the semiconductor laser of a near infrared region, etc. can be listed.

Moreover, a postscript may be added to the holographic recording media before recording, and a holographic recording media with little recorded information.

For this reason, when wavelength of the light source usually used for holographic recording is set to $\lambda$ nm, a holographic recording media is kept and placed in a case or a cassette which can shade light with a wavelength of ($\lambda$+100) nm or below, preferably ($\lambda$+200) nm or below.

When exposing and recording a laser light on the abovementioned holographic recording media, information is recorded by irradiating a laser light under unloading and shielding from a case or a cassette.

Further, a recording medium in which information is recorded by the holographic recording method according to the present invention can be used as a holographic information medium which can be handled in a bright room as same with CD and DVD after being taken from a case or a cassette capable of shielding light.

In the holographic recording media in which the holographic information recording layer is sandwiched between the first substrate and a reading light enters from the first substrate side and information is read from the second substrate side; when D1 is the thickness of the first substrate, D2 is the thickness of the second substrate, and Dh is the thickness of the holographic recording layer, the holographic recording media is characterized in that the holographic recording medium satisfies the above formulas (1) and (2), and the holographic information recording layer has a hardness of 10 - 80 degrees that is measured by the type A durometer specified by ISO 868.

Moreover, in the holographic information media which enters a reference light from the first substrate side and reproduce information with light reflected from the first substrate side, it is characterized that a reflective layer having a reflectance is 80 - 99.5% is laminated on at least one surface of a surface coming in contact with a holographic recording layer of the second substrate of the abovementioned information medium or a surface opposite to the surface. information recording

Moreover, it is preferable that the above-mentioned holographic information recording layer contains at least a binder resin formed from a binder forming compound and a polymer formed by polymerizing a compound having at least one functional group capable of photopolymerizing with a photopolymerization initiator; and information recording is made in a region which contains as a main ingredient a binder having a low refractive index formed from a binder forming compound and a region which contains as a main ingredient a polymer formed by polymerizing a compound having at least one functional group capable of photopolymerizing with a photopolymerization initiator and having a refractive index higher than the region which contains as a main ingredient binder, and further, an anti reflection layer having a reflectance of 0.01 - 1.0% for the wavelength of a read-out light is laminated at a side of a surface of the first substrate on which a read-out light enters in order to suppress the energy of the read-out light.

Further, in the case that information is read from the second substrate side, it is preferable that an antireflection layer having a reflectance of 0.01 - 1.0% for the wavelength of a read-out light is laminated on a surface opposite to a

surface coming in contact with the holographic information recording layer of the second substrate.

It allows that these holographic information media have little irradiation energy of the read-out light of an information recording layer with which the information on the ordinary condition dealt with was recorded, and moreover, it does not almost have read-out deterioration with a regenerative apparatus also after a pressure is applied to the substrate of one side or both sides of information media partially or in whole area, or applied horizontal shearing stress to the first substrate and second substrate.

Even when both sides of the substrate are partially or entirely pressed and a horizontal shearing stress is applied to both the first and second substrates, there is little or no deterioration of the read-out at the reproduction device.

## EXAMPLES

The following is a description of concrete examples of this invention. However, the embodiments of this invention are not to be limited to these examples.

It is to be noted that the polyhydric alcohols (A1 - A4) and the polyhydric isocyanate compounds (N1 - N2) used when preparing a composition for forming a holographic recording layer are shown below.

A1: Polyoxypropylene glyceril ether (UNIOL TG-330 manufactured by NOF Corporation)
A2: Polyoxypropylene glyceril ether (UNIOL TG-1000 manufactured by NOF Corporation)
A3: Polypropylene glycol (UNIOL D-400 manufactured by NOF Corporation)
A4: Polypropylene glycol (UNIOL D-1000 manufactured by NOF Corporation)
N1: 2-isocyanate ethyl-2, 6-diisocyanate caproate (LTI manufactured by Kyowa Hakko Kogyo Co., Ltd.)
N2: A polyisocyanate of hexamethylene diisocyanate (Duranate D-101 manufactured by Asahi Kasei corporation)

<Measurement of hardness of the composition for forming the holographic recording layer>

The composition for forming the holographic recording layer is prepared by a method described hereinafter is prepared and then the composition is used to fill a semitransparent polyethylene container which has a rectangular configuration with the dimensions 10 x 10 x 30 mm. The container was then sealed and left for 2 weeks at 23 °C. Next, the composition for forming the holographic recording layer which is hard and has a block-like configuration was taken from the polyethylene container and hardness at 10 locations was measured using an ISO 868 type A durometer (durometer SGS-719G manufactured by Shiro. Co., Ltd.), and the average value(Hb) was determined. It is to be noted that all of the above operation were performed in a safe light environment.

Also, the composition which was used to fill the semitransparent polyethylene container which is configured as a rectangle having the dimensions 10 x 10 x 30 mm and then kept for 2 weeks at 23 °C in the sealed container, was left in the sealed polyester container for 24 hours under a sunshine fadometer with luminance of 70,000 lux at a temperature of 25 °C. It was then left for four days in a room into which external light was allowed to enter. Next, the composition for forming the holographic recording layer which has a hard block-like configuration was taken from the polyethylene container and hardness at 10 locations was measured using an ISO 868 type A durometer (described above), and the average value(Ha) was determined.

(Compositions 1 - 13 for forming the holographic recording layers)

11.0 mg of sensitizing dye (having the structural formula 1 below) and 34.0 mg of a urethane hardener (Neostann U-600 manufactured by Nitto Kasei Co., Ltd.) were added to the polyhydric alcohols shown in Table 1 under a safe light and mixed and dissolved to thereby prepare Solution 1. 3.100 g of polyethylene glycol dimetacrylate (NK ester 14G manufactured by Shin-Nakamura Chemical Co., Ltd.), 6.900 g of EO denatured tribromophenyl acrylate (New Frontier BR-31 manufactured by Dai-ichi Kogyo Seiyaku Co., Ltd.) and 36.0 mg of 2,6 - di(t-butyl)-4-methyl phenol were separately added to a polyhydric isocyanate in Table 1 and they were all mixed and dissolved to thereby prepare solution A. Next, 0.500 g of (η6-cumene) (η5-cyclopentadienyl) iron ($1^+$) hexafluorophosphate was added and then the solution 1 which is described in the foregoing was added and final composition was degassed using nitrogen and then the gas component which is contained therein was removed using a supersonic washer and the compositions 1 - 13 for forming a holographic recording layer were thereby prepared.

Formula 1

Structural formula (1)

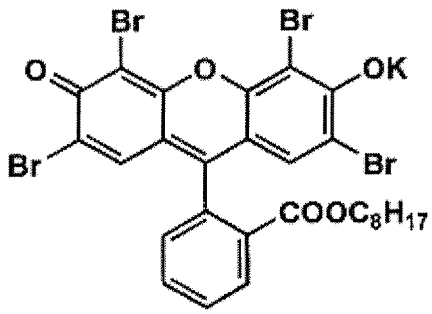

Table 1

| | Composition for Forming Holographic Recording Layer No. | polyhydric Alcohol | | Polyhydric Isocyanate Compound | | | | Functional Group Mole Ratio (NCO/OH) | Durometer Hardness | |
|---|---|---|---|---|---|---|---|---|---|---|
| | | Type | Amount | Type | Amount | Type | Amount | | Hb | Ha |
| Comparative Example | 1 | A1 | 37.599 | N1 | 25.943 | N2 | 25.943 | 1.00 | 70< | 80< |
| This Invention | 2 | A2 | 61.485 | N1 | 14.000 | N2 | 14.000 | 1.00 | 68 | 73 |
| This Invention | 3 | A3 | 46.783 | N1 | 10.675 | N2 | 32.024 | 1.00 | 62 | 66 |
| This Invention | 4 | A4 | 65.555 | N1 | 5.983 | N2 | 17.946 | 1.00 | 53 | 57 |
| This Invention | 5 | A4 | 66.263 | N1 | 5.805 | N2 | 17.416 | 0.96 | 52 | 56 |
| This Invention | 6 | A4 | 67.356 | N1 | 5.532 | N2 | 16.597 | 0.91 | 43 | 46 |
| This Invention | 7 | A4 | 68.293 | N1 | 5.298 | N2 | 15.893 | 0.85 | 34 | 37 |
| This Invention | 8 | A4 | 69.258 | N1 | 5.056 | N2 | 15.169 | 0.80 | 2 | 26 |
| This Invention | 9 | A4 | 70.251 | N1 | 4.808 | N2 | 14.425 | 0.75 | 13 | 16 |
| Comparative Example | 10 | A4 | 71.272 | N1 | 4.553 | N2 | 13.659 | 0.70 | <5 | <5 |
| This Invention | 11 | A4 | 64.314 | N1 | 3.596 | N2 | 21.575 | 1.00 | 55 | 59 |
| This Invention | 12 | A4 | 64.047 | N1 | 2.544 | N2 | 22.894 | 1.00 | 44 | 48 |
| This Invention | 13 | A4 | 62.731 | - | - | N2 | 26.754 | 1.00 | 25 | 28 |

A1: Polyoxypropylene glyceril ether (UNIOL TG-330 manufactured by NOF Corporation)
A2: Polyoxypropylene glyceril ether (UNIOL TG-1000 manufactured by NOF Corporation)
A3: Polypropylene glycol (UNIOL D-400 manufactured by NOF Corporation)
A4: Polypropylene glycol (UNIOL D-1000 manufactured by NOF Corporation)
N1: 2-isocyanate ethyl-2, 6-diisocyanate caproate (LTI manufactured by Kyowa Hakko Kogyo Co., Ltd.)
N2: A polyisocyanate of hexamethylene diisocyanate (Duranate D-101 manufactured by Asahi Kasei corporation)

<Preparation of the holographic recording media>

(Preparation method 1)

Amorphous polyolefin substrates (Zeonex 480R manufactured by Zeon Corporation with total light transmissivity of 92% and Tg= 138 °C) with a diameter of 80 mm and a thickness of 0.5 mm (D1 and D2) in which one surface is subjected to antireflection treatment such that the reflectance due to incident light which is orthogonal to a wavelength of 532 nm is not greater than 0.3%, were used as the first substrate and the second substrate. Resin sheets with an outer diameter of 80 mm and inner diameter of 72 mm were placed as spacers on the surface of the first substrate that had not been subjected to antireflection treatment such that the thickness of the recording layers (Dh) are as shown in Table 2, and each composition for forming the holographic recording layer of Table 1 was placed on the first substrate. Next, surface of the second substrate that had not been subjected to antireflection treatment was pasted on the holographic recording layer composition such that no air layer was enclosed therebetween and the first substrate and the second substrate were pasted together via the spacer. Finally, the ends were sealed using a moisture curing adhesive, and holographic recording media was formed in which the binder forming compound is cross-linked under the cross-linking conditions shown in Table 2.

(Preparation method 2)

One side of a glass with a diameter of 80 mm and a thickness of 0.5 mm (D11) was subjected to antireflection treatment such that the reflectance due to incident light which is orthogonal to a wavelength of 532 nm is 0.1%, to thereby prepare the first substrate. Meanwhile, one side of a substrate formed from bis-phenol A type polycarbonate with a diameter of 80 mm and a thickness of 0.5 mm (D2) (Lupilon H-4000 manufactured by Mitsubishi Engineering-Plastics Corporation) was subjected to aluminum vapor deposition such that the reflectance due to incident light which is orthogonal to a wavelength of 532 nm is not less than 90%, to thereby form the second substrate. Next, a resin sheet with an outer diameter of 80 mm and inner diameter of 72 mm is placed as a spacer on the surface of the foregoing first substrate that has not been subjected to antireflection treatment such that the recording layer thickness (Dh) is as shown in Table 3, and each composition for forming the holographic recording layer shown in Table 1 is placed on the first substrate. Next, the surface of the second substrate that has been subjected to aluminum vapor deposition is pasted on the composition for forming the holographic recording layer such that no air layer is enclosed therebetween and the first substrate and the second substrate are pasted together via the spacer. Finally, the ends are sealed using a moisture curing adhesive, and holographic recording media is formed in which the binder forming compound is cross-linked under the cross-linking conditions shown in Table 2.

Table 2-1

| | Holographic | | Composition for Forming the Recording Layer No. | Heat Treatment Conditions | | Recording Layer Thickness Dh (mm) | Dh/ (D1+D2) |
|---|---|---|---|---|---|---|---|
| | Recording Media No. | Preparation Method | | Temperature (°C) | Time (hr) | | |
| Comparative Example | Recording Media No. 1 | Preparation Method 1 | 1 | 20 | 72 | 0.50 | 0.50 |
| This Invention | Recording Media No. 2 | Preparation Method 1 | 2 | 20 | 72 | 0.50 | 0.50 |
| This Invention | Recording Media No. 3 | Preparation Method 1 | 3 | 20 | 72 | 0.50 | 0.50 |
| This Invention | Recording Media No. 4 | Preparation Method 1 | 4 | 20 | 72 | 0.50 | 0.50 |
| This Invention | Recording Media No. 5 | Preparation Method 1 | 5 | 20 | 72 | 0.50 | 0.50 |

(continued)

| | Holographic | | Composition for Forming the Recording Layer No. | Heat Treatment Conditions | | Recording Layer Thickness Dh (mm) | Dh/ (D1+D2) |
|---|---|---|---|---|---|---|---|
| | Recording Media No. | Preparation Method | | Temperature (°C) | Time (hr) | | |
| This Invention | Recording Media No. 6 | Preparation Method 1 | 6 | 20 | 72 | 0.50 | 0.50 |
| This Invention | Recording Media No. 7 | Preparation Method 1 | 7 | 20 | 72 | 0.50 | 0.50 |
| This Invention | Recording Media No. 8 | Preparation Method 1 | 8 | 20 | 72 | 0.50 | 0.50 |
| This Invention | Recording Media No. 9 | Preparation Method 1 | 9 | 20 | 72 | 0.50 | 0.50 |
| Comparative Example | Recording Media No. 10 | Preparation Method 1 | 10 | 20 | 72 | 0.50 | 0.50 |
| Comparative Example | Recording Media No. 11 | Preparation Method 2 | 1 | 20 | 72 | 0.50 | 0.50 |
| This Invention | Recording Media No. 12 | Preparation Method 2 | 2 | 20 | 72 | 0.50 | 0.50 |
| This Invention | Recording Media No. 13 | Preparation Method 2 | 3 | 20 | 72 | 0.50 | 0.50 |
| This Invention | Recording Media No. 14 | Preparation Method 2 | 4 | 20 | 72 | 0.50 | 0.50 |
| This Invention | Recording Media No. 15 | Preparation Method 2 | 5 | 20 | 72 | 0.50 | 0.50 |
| This Invention | Recording Media No. 16 | Preparation Method 2 | 6 | 20 | 72 | 0.50 | 0.50 |
| This Invention | Recording Media No. 17 | Preparation Method 2 | 7 | 20 | 72 | 0.50 | 0.50 |

Table 2-2

| | Holographic | | Composition for Forming the Layer No. | Heat Treatment Conditions | | Recording Layer Thickness Dh (mm) | Dh/ (D1+D2) |
|---|---|---|---|---|---|---|---|
| | Recording Media No. | Preparation Method | | Temperature (°C) | Time (hr) | | |
| This Invention | Recording Media No. | Preparation 18Method 2 | 8 | 20 | 72 | 0.50 | 0.50 |
| This Invention | Recording Media No. 19 | Preparation Method 2 | 9 | 20 | 72 | 0.50 | 0.50 |
| Comparative Example | Recording Media No. 20 | Preparation Method 2 | 10 | 20 | 72 | 0.50 | 0.50 |
| This Invention | Recording Media No. 21 | Preparation Method 2 | 11 | 20 | 72 | 0.50 | 0.50 |
| This Invention | Recording Media No. 22 | Preparation Method 2 | 12 | 20 | 72 | 0.50 | 0.50 |
| This Invention | Recording Media No. 23 | Preparation Method 2 | 13 | 20 | 72 | 0.50 | 0.50 |

(Recording and evaluation of the holographic recording media)

(Recording and evaluation of the holographic recording media 1)

The holographic recording media prepared as described above which were left for 1 week at 23 °C while being shielded from light, were used for recording on a set of different holograms in accordance with the procedures described in U.S. Patent No. 5,719,691 or Japanese Patent Application Laid-Open 2002-123949, and measurement and evaluation of sensitivity (recording energy) as well as measurement and evaluation of the degree of deformation of the holographic recording media prior to holographic recording were performed using a method described hereinafter. The results obtained are shown in Fig. 3.

(Measurement of the degree of deformation)

The prepared holographic recording layers which were left for 1 week at a temperature of 23 °C while being shielded from light were subjected to holographic exposure having the digital pattern of an energy level of 0.1 - 30 mJ/$cm^2$ using a holographic preparation device applying each of the media which is equipped with Nd: YAG laser (532 nm). Next, the holographic recording media were left at a distance of 20 cm apart for one hour under a 20-watt white light fluorescent lamp. The recording media which were left under the white fluorescent lamp were read using a CCD with refracted light obtained by using Nd: YAG laser (532 nm) as the read-out light in a dark room, and the minimum amount of exposure for which a favorable digital pattern can be reproduced is measured as the sensitivity (S).

(Measurement of degree of deformation of holographic recording media)

The prepared holographic recording media were left for 1 week at a temperature of 23 °C while being shielded from light, and the thickness da0 of the holographic recording media was measured in safe light environment using a micrometer (Micrometer MDC-25M manufactured by Mitutoyo Corporation). Next, a load of 250 g/$cm^2$ per unit of thickness was applied to the first substrate surface side of the holographic recording media having an area of 20 mm x 20 mm for 120 minutes and then the degree of deformation were evaluated using the method described below given that thickness da1 and da60 respectively is the thickness of the holographic recording media 1 minute and then 60 minutes after the load was removed.

daa= [thickness of holographic recording media da0] - [thickness of holographic recording media 1 minute after the load was removed da1]

dab= [thickness of holographic recording media da0] - [thickness of holographic recording media 60 minutes after the load was removed da60]

Table 3

| | Holographic Recording Media No. | S [mJ/cm$^2$] | daa [μm] | dab [μm] |
|---|---|---|---|---|
| Comparative Example | Recording Media No. 1 | 4.3 | 0 | 0 |
| This Invention | Recording Media No. 2 | 3.9 | 0 | 0 |
| This Invention | Recording Media No. 3 | 3.6 | 0 | 0 |
| This Invention | Recording Media No. 4 | 3.2 | 0 | 0 |
| This Invention | Recording Media No. 5 | 3.2 | 0 | 0 |
| This Invention | Recording Media No. 6 | 2.8 | 0 | 0 |
| This Invention | Recording Media No. 7 | 2.8 | 0 | 0 |
| This Invention | Recording Media No. 8 | 2.8 8 | 5 | 0 |
| This Invention | Recording Media No. 9 | 2.8 | 10 | 0 |
| Comparative Example | Recording Media No. 10 | 2.8 | 30 | 5 |
| Comparative Example | Recording Media No. 11 | 2.3 | 0 | 0 |
| This Invention | Recording Media No. 12 | 1.8 | 0 | 0 |
| This Invention | Recording Media No. 13 | 1.7 | 0 | 0 |
| This Invention | Recording Media No. 14 | 1.6 | 0 | 0 |
| This Invention | Recording Media No. 15 | 1.6 | 0 | 0 |
| This Invention | Recording Media No. 16 | 1.4 | 0 | 0 |
| This Invention | Recording Media No. 17 | 1.4 | 2 | 0 |
| This Invention | Recording Media No. 18 | 1.4 | 5 | 0 |
| This Invention | Recording Media No. 19 | 1.4 | 10 | 0 |
| Comparative Example | Recording Media No. 20 | 1.4 | 30 | 5 |
| This Invention | Recording Media No. 21 | 1.5 | 0 | 0 |
| This Invention | Recording Media No. 22 | 1.3 | 0 | 0 |
| This Invention | Recording Media No. 23 | 1.5 | 5 | 0 |

From the table above, it can be seen that the recording media of this invention is a holographic recording media in which there is no loss of sensitivity and for which there is a force for restoration with respect to external stress.

(Evaluation of holographic recording media 2)

The shrink resistance properties at the time of holographic exposure of the holographic recording media used for measuring sensitivity, diffraction rate contrast, degree of deformation of the holographic recording media are measured and evaluated and the results shown in Table 4.

(Evaluation of shrink resistance properties at the time of holographic exposure)

The shrink resistance properties at the time of holographic exposure were evaluated using the shrinkage rate which is measured by a method described hereinafter.

Fig. 1 is a schematic diagram showing principle of operation of the measuring device which measures shrink rate.

Namely, the emission point of the white illumination light source which illuminates the holographic recording media 3 which has been subjected to holographic exposure described above is 01, while the view point of the observer is 02. In the measuring device, the white illumination light source 4 has the emission point 01 while the spectrometer 5 has the view point 02. The spectrometer 5 is connected to the personal computer 6 and the upper surface of the holographic recording media 3 for which the luminance distribution of the spectral wavelength is to be measured has placed thereon a moveable pinhole plate 7 which has formed therein a pinhole 8 such that only some of the light can pass through. The movable pinhole plate 7 is configured so as to be moveable to suitably selected positions on the stage XY which is not shown.

That is to say, in the case where the moveable pinhole plate 7 is at the point P (I, J), the angle formed between the middle of the pinhole 8 and the white illumination light source is θc, and the angle with the spectrometer is θi. The region for the point P (I, J) of the holographic recording media 3 is illuminated with illumination 9 from the θc angle and reproduction light 11 exits from the θi angle direction. The reproduction light 11 is separated into its spectral components by the spectrometer 5, and the wavelength at which luminance is a peak is the reproduction wavelength λc at P (I,J). Using this relationship, θc, θi, and λc are measured at each point of the holographic recording media 3 while moving the movable pinhole plate 7.

Also, given that the shrinkage rate of the hologram at the point P (I, J) is M(I, J), the shrinkage rate M(I, J) of the hologram can be shown by the equation below given that the average refractivity of the light image recording layer prior to recording is nr and the average refractivity of the hologram after development is nc.

$$M(I, J) = -nc/nr \bullet \lambda r/\lambda c \bullet (\cos\theta c - \cos\theta i) / (\cos\theta o - \cos\theta r)$$

It is to be noted that in the above equation, θo is the angle of incidence of the holographic recording media, λr is the wavelength of the laser beam, and θr is the angle of incidence of the reference beam for the holographic recording media.

(Evaluation of the refractivity contrast)

The refractivity contrast is determined by diffraction efficiency which is measured using a method described in the following. The measurement of the diffraction efficiency is done by using an ART 25C spectrophotometer manufactured by JASCO Corporation, and a photomultimeter having a slit with a width of 3 mm is placed on the circumference of a circle having a radius of 20 cm with the sample at the center thereof. Light of a single color having a width of 0.3 mm is irradiated at an angle of 45 ° on the sample and the light diffracted from the sample is detected. The ratio of maximum value other than that for the regular reflection and the value obtained when the light entered directly without using the specimen was received, and ws used as the diffraction rate, and the refraction rate contrast (An) was determined from the diffraction rate of the hologram that was obtained.

(Measurement of degree of deformation of holographic recording media after recording)

The thickness db0 of the holographic recording media which was subjected to holographic exposure was measured using a micrometer (described in the foregoing). Next, a load of 500 g/cm$^2$ per unit of thickness was applied to the first substrate surface side of the holographic recording media having an area of 20 mm x 20 mm and then it was left for 60 minutes and then the degree of deformation were evaluated using the method described below given that

thickness db0.5 and db10 respectively is the thickness of the holographic recording media 0.5 minute and then 10 minutes after the load was removed.

dba= [thickness of exposed holographic recording media db0] - [thickness of holographic recording media 0.5 minute after the load is removed db0.5]

dbb= [thickness of the exposed holographic recording media db0] - [thickness of holographic recording media 10 minutes after the load is removed db10]

Table 4

| | Holographic Recording Media No. | Shrink rate (%) | $\Delta n$ (x $10^{-3}$) | dba [$\mu$m] | dbb [$\mu$m] |
|---|---|---|---|---|---|
| Comparative Example | Recording Media No. 1 | 0.2 | 6.3 | 0 | 0 |
| This Invention | Recording Media No. 2 | 0.1 | 6.5 | 0 | 0 |
| This Invention | Recording Media No.3 | 0.1 | 6.6 | 0 | 0 |
| This Invention | Recording Media No. 4 | 0.1 | 6.8 | 0 | 0 |
| This Invention | Recording Media No. 5 | 0.1 | 6.8 | 0 | 0 |
| This Invention | Recording Media No. 6 | 0.1 | 6.9 | 0 | 0 |
| This Invention | Recording Media No. 7 | 0.1 | 6.7 | 0 | 0 |
| This Invention | Recording Media No. 8 | 0.1 | 6.6 | 0 | 0 |
| This Invention | Recording Media No. 9 | 0.1 | 6.4 | 2 | 0 |
| Comparative Example | Recording Media No. 10 | 0.1 | 6.2 | 10 | 0 |

From the table above, it can be seen that the recording media of this invention has little shrinkage during holographic exposure and even if a load is applied on the recording media the deformation is immediately restored to the original form.

<Evaluation of the holographic information media>

(Evaluation of the holographic information media 1)

The holographic recording media which was created in Table 4 and on which recorded information is fixed, is used as holographic information media and some of these are stored under conditions described hereinafter and reproduction of the digital pattern is evaluated by a method suitable for each information media immediately after storage and the difference in the minimum amount of exposure for which favorable reproduction of the digital pattern was possible and the degree of coloration were evaluated using a method described hereinafter, and the obtained results are shown in Table 5.

(Heat resistance during storage)

The holographic information media was stored for 2 weeks at 60 °C and the difference in minimum exposure

sensitivity immediately after storage ($\Delta Sh$) was obtained.

$$\text{Difference in minimum exposure sensitivity } (\Delta Sh) = \text{minimum exposure sensitivity after storage } (S2h) - \text{minimum exposure sensitivity prior to storage } (S1h)$$

(Fading resistance during storage)

The holographic information media was stored for 4 days under a 70,000 lux sunshine fadometer at a temperature of 35 °C and difference in the minimum exposure sensitivity ($\Delta Sw$) immediately after storage was obtained.

$$\text{Difference in minimum exposure sensitivity } (\Delta Sw) = \text{minimum exposure sensitivity after storage } (S2w) - \text{minimum exposure sensitivity prior to storage } (S1w)$$

(Evaluation of coloration level)

The holographic recording media used in Table 5 below were subjected to treatment under 70,000 lux sunshine fadometer for 5 minutes without undergoing holographic exposure and then subjected to heat treatment at 100 °C to thereby prepare the holographic information media. Next, the holographic information media was stored under conditions described hereinafter and the transmissivity and reflectance of each information media was measured immediately after using a spectrophotometer (U-4100 Spectrophotometer manufactured by Hitachi High-Technologies Corporation). It is to be noted that transmissivity is measured in the case where the holographic information media does not have a reflection layer, while the reflectance is measured from the first substrate side in the case where the holographic information media has a reflection layer.

(Heat resistance during storage)

The holographic information media was stored for 2 weeks at 60 °C and the difference in transmissivity at 400 nm immediately after storage ($\Delta Th$) was obtained.

$$\text{Difference in transmissivity } (\Delta Th) = \text{Transmissivity or reflectance before storage } (T1h) - \text{Transmissivity or reflectance after storage } (T2h)$$

(Fading resistance during storage)

The holographic information media was stored for 4 days under a 70,000 lux sunshine fadometer at a temperature of 35 °C and difference in transmissivity or reflectance at 400 nm immediately after storage ($\Delta Th$) is obtained.

Difference in transmissivity ($\Delta Tw$) = Transmissivity or reflectance before storage (T1w) - Transmissivity or reflectance after storage (T2w)

Table 5

| | Holographic Information Media No. | Holographic Recording Media No. | ΔSh [mJ/cm$^2$] | ΔSw [mJ/cm$^2$] | ΔTh [%] | ΔTw [%] |
|---|---|---|---|---|---|---|
| Comparative Example | Information Media No. 1 | Recording Media No. 1 | 0.1 | 0.2 | 0.2 | 0.3 |
| This Invention | Information Media No. 2 | Recording Media No. 2 | 0.1 | 0.2 | 0.2 | 0.3 |
| This Invention | Information Media No. 3 | Recording Media No. 3 | 0.1 | 0.2 | 0.2 | 0.3 |
| This Invention | Information Media No. 4 | Recording Media No. 4 | 0.1 | 0.2 | 0.2 | 0.3 |
| This Invention | Information Media No. 5 | Recording Media No. 5 | 0.1 | 0.2 | 0.2 | 0.3 |
| This Invention | Information Media No. 6 | Recording Media No. 6 | 0.1 | 0.2 | 0.2 | 0.3 |
| This Invention | Information Media No. 7 | Recording Media No. 7 | 0.1 | 0.2 | 0.2 | 0.3 |
| This Invention | Information Media No. 8 | Recording Media No. 8 | 0.1 | 0.2 | 0.2 | 0.3 |
| This Invention This Invention | Information Media No. 9 | Recording Media No. 9 | 0.1 | 0.2 | 0.2 | 0.3 |
| Comparative Example | Information Media No. 10 | Recording Media No. 10 | 0.1 | 0.2 | 0.2 | 0.3 |
| Comparative Example | Information Media No. 11 | Recording Media No. 11 | 0.1 | 0.2 | 0.3 | 0.4 |
| This Invention | Information Media No. 12 | Recording Media No. 12 | 0.1 | 0.2 | 0.3 | 0.4 |
| This Invention | Information Media No. 13 | Recording Media No. 13 | 0.1 | 0.2 | 0.3 | 0.4 |
| This Invention | Information Media No. 14 | Recording Media No. 14 | 0.1 | 0.2 | 0.3 | 0.4 |
| This Invention | Information Media No. 15 | Recording Media No. 15 | 0.1 | 0.2 | 0.3 | 0.4 |
| This Invention | Information Media No. 16 | Recording Media No. 16 | 0.1 | 0.2 | 0.3 | 0.4 |
| This Invention | Information Media No. 17 | Recording Media No. 17 | 0.1 | 0.2 | 0.3 | 0.4 |
| This Invention | Information Media No. 18 | Recording Media No. 18 | 0.1 | 0.2 | 0.3 | 0.4 |

(continued)

| | Holographic Information Media No. | Holographic Recording Media No. | ΔSh [mJ/cm$^2$] | ΔSw [mJ/cm$^2$] | ΔTh [%] | ΔTw [%] |
|---|---|---|---|---|---|---|
| This Invention | Information Media No. 19 | Recording Media No. 19 | 0.1 | 0.2 | 0.3 | 0.4 |
| Comparative Example | Information Media No. 20 | Recording Media No. 20 | 0.1 | 0.2 | 0.4 | 0.5 |
| This Invention | Information Media No. 21 | Recording Media No. 21 | 0.1 | 0.2 | 0.3 | 0.4 |
| This Invention | Information Media No. 22 | Recording Media No. 22 | 0.1 | 0.2 | 0.3 | 0.4 |
| This Invention | Information Media No. 23 | Recording Media No. 23 | 0.1 | 0.2 | 0.3 | 0.5 |

From the above table it can be seen that storage stability is favorable for the holographic information media of this invention compared to that of the comparative example, without reduction of sensitivity for reproduction, and in addition, favorable results in with little coloration is seen.

(Evaluation of the holographic information media 2)

The holographic recording media which were created in Table 4 and on which recorded information is fixed are used as holographic information media and some of these are subjected to deformation and drop testing and then evaluated. Reproduction of the digital pattern is evaluated by a method suitable for the respective information media for media in which changes in outer appearance and deformation were not seen immediately after testing and the difference after storage for the minimum amount of exposure for which favorable reproduction of the digital pattern was possible was evaluated. The obtained results are shown in Table 6.

(Resistance to deformation stress)

Both ends of the holographic information media were fixed and vibrated such that there were 28,000 rotations per minute at the middle portion and displacement was ±0.4 mm in the perpendicular direction of the information media, and the difference in minimum exposure sensitivity (ΔSb) immediately after application of the deformation stress is obtained.

Difference in minimum exposure sensitivity (ΔSb) = minimum exposure sensitivity after application of the deformation stress of vibration (S2b)- minimum exposure sensitivity prior to application of the deformation stress of vibration (S1b)

(Impact Resistance)

Holographic information media having a thickness of 10 mm is dropped from a height of 1 m on a rubber sheet having a thickness of 80 degrees when measured by a ISO 868 type A durometer, such that the information media and the rubber sheet are parallel and perpendicular to each other, and minimum exposure sensitivity immediately after the dropping is determined.

Difference in parallel drop test minimum exposure sensitivity ($\Delta Sd1$) = minimum exposure sensitivity after parallel drop test (S2d1)- minimum exposure sensitivity prior to parallel drop test (S1d1)

Difference in perpendicular drop test minimum exposure sensitivity ($\Delta Sdp$) = minimum exposure sensitivity after perpendicular drop test (S2dp)- minimum exposure sensitivity prior to perpendicular drop test (S1dp)

Table 6-1

| | Holographic Information Media No. | Recording Media No. | Deformation Stress Resistance | | Impact Resistance | | | |
|---|---|---|---|---|---|---|---|---|
| | | | | | Parallel drop test | | Perpendicular drop test | |
| | | | Outer Appearance | ΔSb [mJ/ cm$^2$] | Outer Appearance | ΔSb1 [mJ/ cm$^2$] | Outer Appearance | ΔSbp [mJ/ cm$^2$] |
| Comparative Example | Information Media No. | Recording 1 Media No. 1 | *1 | *4 | *1 | - | *1 | *4 |
| This Invention | Information Media No. 2 | Recording Media No. 2 | OK | 0.0 | OK | 0.0 | OK | 0.0 |
| This Invention | Information Media No. 3 | Recording Media No. 3 | OK | 0.0 | OK | 0.0 | OK | 0.0 |
| This Invention | Information Media No. | Recording 4 Media No. 4 | OK | 0.0 | OK | 0.0 | OK | 0.0 |
| This Invention | Information Media No. 5 | Recording Media No. 5 | OK | 0.0 | OK | 0.0 | OK | 0.0 |
| This Invention | Information Media No. 6 | Recording Media No. 6 | OK | 0.0 | OK | 0.0 | OK | 0.0 |
| This Invention | Information Media No. | Recording 7 Media No. 7 | OK | 0.0 | OK | 0.0 | OK | 0.0 |
| This Invention | Information Media No. | Recording 8 Media No. 8 | OK | 0.0 | OK | 0.0 | OK | 0.0 |
| This Invention | Information Media No. | Recording 9 Media No. 9 | OK | 0.0 | OK | 0.0 | OK | 0.0 |
| Comparative Example | Information Media No. 10 | Recording Media No. 10 | OK | *3 | OK | 0.0 | OK | 0.0 |
| Comparative Example | Information Media No. 11 | Recording Media No. 11 | *1 | *4 | *2 | - | *2 | *4 |
| This Invention | Information Media No. 12 | Recording Media No. 12 | OK | 0.0 | OK | 0.0 | OK | 0.0 |
| This Invention | Information Media No. 13 | Recording Media No. 13 | OK | 0.0 | OK | 0.0 | OK | 0.0 |

Table 6-2

| | Holographic Information Media No. | Holographic Recording Media No. | Deformation Stress Resistance | | Impact Resistance | | | |
|---|---|---|---|---|---|---|---|---|
| | | | | | Parallel drop test | | Perpendicular drop test | |
| | | | Outer Appearance | ΔSb [mJ/ $cm^2$] | Outer Appearance | ΔSb1 [mJ/ $cm^2$] | Outer Appearance | ΔSbp [mJ/ $cm^2$] |
| This Invention | Information Media No. 14 | Recording Media No. 14 | OK | 0.0 | OK | 0.0 | OK | 0.0 |
| This Invention | Information Media No. 15 | Recording Media No. 15 | OK | 0.0 | OK | 0.0 | OK | 0.0 |
| This Invention | Information Media No. 16 | Recording Media No. 16 | OK | 0.0 | OK | 0.0 | OK | 0.0 |
| This Invention | Information Media No. 17 | Recording Media No. 17 | OK | 0.0 | OK | 0.0 | OK | 0.0 |
| This Invention | Information Media No. 18 | Recording Media No. 18 | OK | 0.0 | OK | 0.0 | OK | 0.0 |
| This Invention | Information Media No. 19 | Recording Media No. 19 | OK | 0.0 | OK | 0.0 | OK | 0.0 |
| Comparative Example | Information Media No. 20 | Recording Media No. 20 | OK | *3 | OK | 0.0 | OK | 0.0 |

*1 There is very little cracking of the information recording layer
*2 The first substrate glass is broken
*3 Evaluation impossible because reproduction was could not be performed on the hologram after deformation stress was applied
*4 Evaluation was not done since problems with respect to outer appearance were evident

From the table above, it can be seen that there are no changes in outer appearance the holographic information media of this invention even when unanticipated stress is applied thereto, and favorable results without sensitivity reduction are seen when compared with those of the comparative example.

## Claims

1. A holographic recording medium including:

   a first substrate, a holographic recording layer and a second substrate which are laminated in this order, wherein holographic recording is conducted for the holographic recording layer by entering information light and reference light from the first substrate side;
   the holographic recording medium **characterized in that** when D1 is the thickness of the first substrate, D2 is the thickness of the second substrate, and Dh is the thickness of the holographic recording layer, the holographic recording medium satisfies the following formulas (1) and (2), and the holographic recording layer has a hardness of 10 - 70 degrees that is measured by the type A durometer specified by ISO 868.

$$(1)\quad 0.2 \leq Dh/(D1+D2) \leq 1.0$$

$$(2)\quad 1.0 \leq (Dh+D1+D2) \leq 3.0\ [mm]$$

2. The holographic recording medium described in claim 1, **characterized in that** the holographic recording layer comprises a binder forming compound, a photopolymerizable compound which has a functional group being capable of photopolymerizing and a photopolymerization initiator which can start a polymerization reaction of the photopolymerizable compound.

3. The holographic recording medium described in claim 2, **characterized in that** the photopolimerizable compound is in a liquid state under ordinary temperature or has a melting point of 60°C or less and the functional group being capable of photopolymerizing is an ethylenic unsaturated double bond.

4. The holographic recording medium described in claim 2, **characterized in that** the refractive index of a binder formed by the binder forming compound is less than the refractive index of a polymer formed by polymerization of the photopolymerizable compound with the polymerization initiator.

5. The holographic recording medium described in claim 2, **characterized in that** after the photopolymerizable compound contained in the holographic recording layer was photopolymerized by an exposure conducted overall for the holographic recording layer, the holographic recording layer has the hardness of 15 - 80 degrees that is measured with the type A durometer specified by ISO 868.

6. The holographic recording medium described in claim 1, **characterized in that** an antireflection layer having a reflectance of 0.01 - 1.0% to the wavelength of information light and reference light is laminated on a surface side of the first substrate on which information light and reference light enter.

7. The holographic recording medium described in claim 6, **characterized in that** an antireflection layer having a reflectance of 0.01 - 1.0% to the wavelength of information light and reference light is laminated on a surface side of the second substrate opposite to a surface coming in contact with the holographic recording layer.

8. The holographic recording medium described in claim 1, **characterized in that** a reflection layer having a reflectance of 80 - 99.9% to the wavelength of information light and reference light is laminated on at least one surface of a surface of the second substrate coming in contact with the holographic recording layer and a surface opposite the surface.

9. The holographic recording medium described in claim 8, **characterized in that** the holographic recording layer comprises a binder forming compound, a photopolymerizable compound which has a functional group being capable

of photopolymerizing and a photopolymerization initiator which can initiate a polymerization reaction of the photopolymerizable compound.

10. The holographic recording medium described in claim 9, **characterized in that** the photopolimerizable compound is in a liquid state under ordinary temperature or has a melting point of 60°C or less and the functional group being capable of photopolymerizing is an ethylenic unsaturated double bond.

11. The holographic recording medium described in claim 9, wherein **characterized in that** the refractive index of a binder formed by the binder forming compound is less than the refractive index of a polymer formed by polymerization of the photopolymerizable compound with the polymerization initiator.

12. The holographic recording medium described in claim 9, **characterized in that** after the photopolymerizable compound contained in the holographic recording layer was photopolymerized by entire exposure conducted for the holographic recording layer, the holographic recording layer has the hardness of 15 - 80 degrees that is measured with the durometer of type A specified by ISO 868.

13. The holographic recording medium described in claim 8, **characterized in that** an antireflection layer having a reflectance of 0.01 - 1.0% to the wavelength of information light and reference light is laminated on a surface side of the first substrate on which information light and reference light enter.

14. A holographic recording method for recording information on the holographic recording medium of claim 2, **characterized by** comprising:

reacting the binder forming compound for forming a binder;
conducting holographic exposure based on the information from a side on which the first substrate is laminated;
activating the photopolymerization initiator with the holographic exposure for generating activated species; and
diffusing polymerizing the photopolymerizable compound by the activated species in the holographic recording layer.

15. The holographic recording method described in claim 14, **characterized in that** further comprising:

stabilizing the recorded information by heating or irradiating the holographic recording medium.

16. A holographic information medium comprising:

a first substrate;
a holographic information recording layer having a region where a binder formed by a binder forming compound is a major component and a region where a polymer obtained by polymerizing a photopolymerizable compound having a functional group being capable of photopolymerizing is a major component in accordance with information; and
a second substrate, wherein the first substrate, the holographic information recording layer and the second substrate are laminated in that order, and read-out light enters from the first substrate side and information is read out from the second substrate side,
the holographic information medium **characterized in that** when D1 is the thickness of the first substrate, D2 is the thickness of the second substrate, and Dh is the thickness of the holographic recording layer, the holographic recording medium satisfies the following formulas (1) and (2), and the holographic recording layer has a hardness of 15- 80 degrees that is measured by the type A durometer specified by ISO 868.

$$(1)\ 0.2 \le Dh/(D1+D2) \le 1.0$$

$$(2)\ 1.0 \le (Dh + D1 + D2) \le 3.0\ [mm]$$

FIG. 1

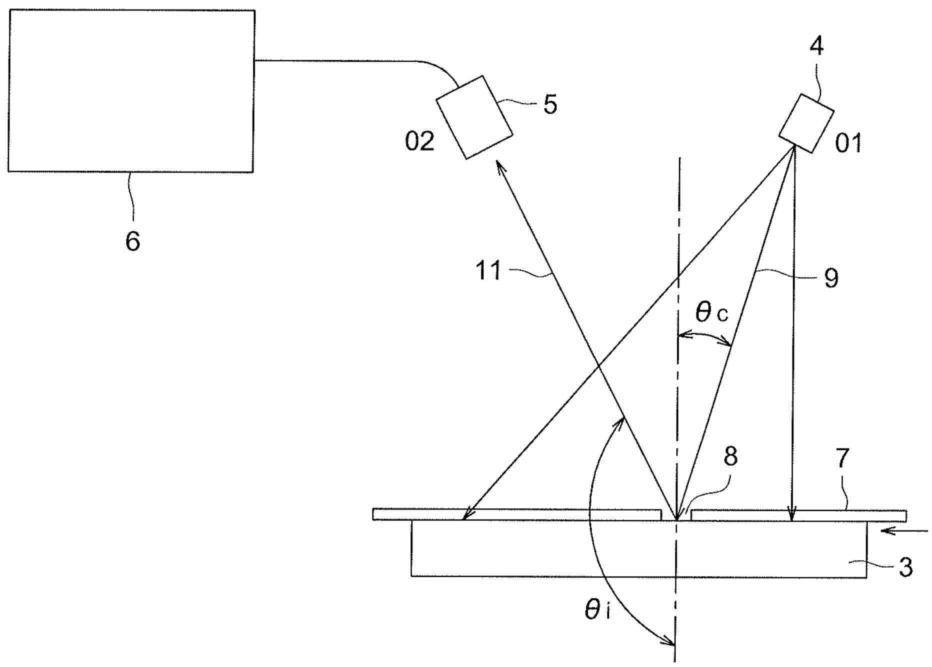

FIG. 2 ( a )

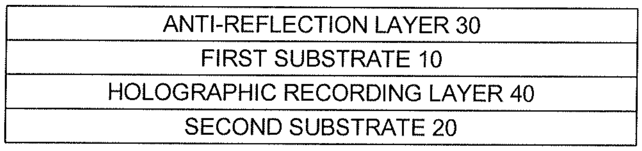


FIG. 2 ( b )

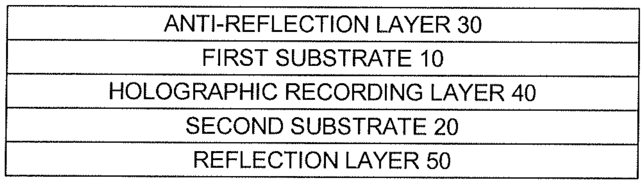


FIG. 2 ( c )

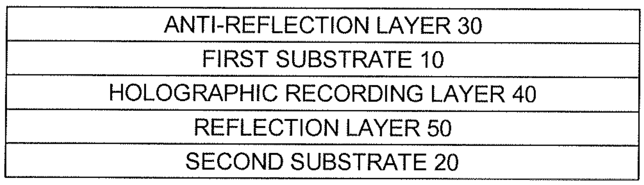

## INTERNATIONAL SEARCH REPORT

International application No. PCT/JP2005/014378

A. CLASSIFICATION OF SUBJECT MATTER
Int.Cl$^7$ G03H1/02, 1/04, G11B7/0065, 7/24

According to International Patent Classification (IPC) or to both national classification and IPC

B. FIELDS SEARCHED

Minimum documentation searched (classification system followed by classification symbols)
Int.Cl$^7$ G03H1/00-5/00, G11B7/0065, 7/24, G03F7/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)
INSPEC(DIALOG), IEEE, JSTPlus(JOIS)

C. DOCUMENTS CONSIDERED TO BE RELEVANT

| Category* | Citation of document, with indication, where appropriate, of the relevant passages | Relevant to claim No. |
|---|---|---|
| A | JP 10-105030 A (Lucent Technologies Inc.), 24 April, 1998 (24.04.98), All references; particularly, Par. Nos. [0014] to [0028], [0034] to [0035], [0045]; Fig. 1 & EP 824222 A1 & US 5874187 A & US 6165648 A & DE 69703326 D & DE 69703326 T & SG 53017 A | 1-16 |
| A | IONINA, N.V. How the holographic characteristics of samples of a polymeric recording medium are associated with their hardness. J.Opt.Technol. June 2002, Vol.69, No.9, pages 403 to 404 | 1 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 15 September, 2005 (15.09.05) | 04 October, 2005 (04.10.05) |
| Name and mailing address of the ISA/ Japanese Patent Office | Authorized officer |
| Facsimile No. | Telephone No. |

Form PCT/ISA/210 (second sheet) (January 2004)

INTERNATIONAL SEARCH REPORT

International application No.
PCT/JP2005/014378

C (Continuation). DOCUMENTS CONSIDERED TO BE RELEVANT

| Category* | Citation of document, with indication, where appropriate, of the relevant passages | Relevant to claim No. |
|---|---|---|
| A | JP 7-261643 A (Toyo Ink Manufacturing Co., Ltd.),<br>13 October, 1995 (13.10.95),<br>Abstract; Par. No. [0027]<br>(Family: none) | 1,3,10,15 |
| A | JP 5-107999 A (Nippon Paint Co., Ltd.),<br>30 April, 1993 (30.04.93),<br>Par. Nos. [0032], [0048]<br>& US 5453340 A & US 5665494 A<br>& EP 509512 A1 & CA 2066077 A<br>& DE 69229759 C & DE 69229759 T<br>& KR 228929 B | 1 |
| A | EP 949546 A2 (DAI NIPPON PRINTING CO., LTD.),<br>12 April, 1999 (12.04.99),<br>Abstract<br>& JP 11-296056 A & JP 11-291379 A<br>& JP 11-291380 A & JP 2000-162948 A<br>& US 6432498 B2 & US 6805934 B<br>& US 2005/0013959 A1 | 1 |
| A | JP 2002-123949 A (Optware Corp.),<br>26 April, 2002 (26.04.02),<br>All references (literature cited in this application),<br>& JP 3655819 B2 & WO 02/015176 A1<br>& US 2004/0042374 A1 & EP 1324322 A1<br>& AU 6786601 A & CN 1446355 A | 8 |
| A | JP 11-352303 A (Lucent Technologies Inc.),<br>24 December, 1999 (24.12.99),<br>All references (literature cited in this application),<br>& US 6482551 B1 & US 6103454 A<br>& US 2002/0142227 A1 & EP 945762 A1 | 1-16 |
| A | JP 2000-172154 A (Lucent Technologies Inc.),<br>23 June, 2000 (23.06.00),<br>All references<br>& EP 1026546 A1 & DE 69902346 D<br>& DE 69902346 T | 1-16 |
| A | JP 2000-250382 A (Lucent Technologies Inc.),<br>14 September, 2000 (14.09.00),<br>All references<br>& US 6627354 B1 & EP 1033623 A2<br>& JP 3540238 B2 | 1-16 |
| A | WO 2004/017141 A1 (Konica Medical and Graphic Corp.),<br>26 February, 2004 (26.02.04),<br>(Family: none) | 1-16 |

Form PCT/ISA/210 (continuation of second sheet) (January 2004)

INTERNATIONAL SEARCH REPORT

International application No. PCT/JP2005/014378

C (Continuation). DOCUMENTS CONSIDERED TO BE RELEVANT

| Category* | Citation of document, with indication, where appropriate, of the relevant passages | Relevant to claim No. |
|---|---|---|
| P,A | WO 2004/086151 A1 (Konica Minolta Holdings Kabushiki Kaisha), 07 October, 2004 (07.10.04), & US 2004/0197670 A1 & JP 2004-287138 A | 1-16 |
| P,A | WO 2004/090646 A1 (Konica Minolta Medical & Graphic, Inc.), 21 October, 2004 (21.10.04), & US 2004/0202942 A1 & JP 2005-043862 A | 1-16 |
| P,A | WO 2004/107334 A1 (Konica Minolta Medical & Graphic, Inc.), 09 December, 2004 (09.12.04), & US 2004/0240010 A1 & JP 2004-354586 A | 1-16 |
| P,A | WO 2005/029201 A1 (Konica Minolta Medical & Graphic, Inc.), 31 March, 2005 (31.03.05), & US 2005/0058911 A1 & JP 2005-115318 A & JP 2005-181953 A | 1-16 |
| E,A | JP 2005-250060 A (Toshiba Corp.), 15 September, 2005 (15.09.05), Par. Nos. [0004], [0010] to [0011] (Family: none) | 1-16 |

Form PCT/ISA/210 (continuation of second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6482551 B
- US 5719691 A
- JP 2002123949 A
- GB 9929953 A
- JP 10340479 A
- US 4942112 A
- US 5759721 A
- JP 6301322 A
- JP 2000344716 A
- JP 2003029604 A
- US 5027436 A
- US 5096790 A
- US 5147758 A
- US 5204467 A
- US 5256520 A
- US 6011180 A
- EP 255486 A
- EP 256981 A
- EP 277915 A
- EP 318893 A
- EP 401165 A
- EP 565488 A
- JP 2236553 A
- JP 5046061 A
- JP 5216227 A
- JP 5247110 A
- JP 5257279 A
- JP 6175554 A
- JP 6175562 A
- JP 6175563 A
- JP 6175566 A
- JP 6186899 A
- JP 6195015 A
- JP 6202540 A
- JP 6202541 A
- JP 6202543 A
- JP 6202544 A
- JP 6202548 A
- JP 6324615 A
- JP 6329654 A
- JP 7013473 A
- JP 7028379 A
- JP 7084502 A
- JP 7084503 A
- JP 7181876 A
- JP 9106069 A
- JP 9309907 A
- JP 2002060429 A
- JP 2002062786 A
- JP 2002244535 A
- JP 2002296764 A
- JP 7027902 A
- JP 2001123264 A
- JP 2001264509 A
- JP 5142401 A
- JP 5249303 A
- US 63504 A
- US 6331803 B
- US 735902 A
- US 7253501 B
- US 11311702 B
- US 5838467 A
- US 6700686 B
- JP 11057719 A
- JP 2003178456 A
- JP 2003228875 A
- JP 2003331464 A
- JP 2004126038 A
- JP 2004126040 A
- JP 2004126041 A
- JP 2004127379 A
- US 6625100 B
- US 20040042375 A
- US 20040067419 A
- US 6163391 A
- US 6414296 B
- US 2002136143 A
- JP 9305978 A
- JP 10124872 A
- JP 11219540 A
- JP 2000098862 A
- JP 2000298837 A
- JP 2001023169 A
- JP 2002083431 A
- JP 2002123948 A
- JP 2003043904 A
- WO 9957719 A
- WO 0205270 A
- WO 0275727 A

**Non-patent literature cited in the description**


- **HANS J. COUFAL.** Holographic Data Storage (Springer Series in Optical Sciences. Springer-Verlag GmbH & Co. KG, August 2000, vol. 76